# FASCICULE DE BREVET EUROPEEN

(11) **EP 4 179 299 B1**
(45) Date de publication et mention de la délivrance du brevet: **28.08.2024**
(21) Numéro de dépôt: 21739149.9
(22) Date de dépôt: 09.07.2021
(51) Int. Cl.: G01N 21/71, G01N 15/10

(54) **SYSTEME DE CARACTERISATION DE PARTICULES SE PRESENTANT SOUS LA FORME D'UN AEROSOL DANS UN GAZ AMBIANT ET PROCEDE ASSOCIE**
SYSTEM ZUR CHARAKTERISIERUNG VON PARTIKELN IN FORM EINES AEROSOLS IN EINEM UMGEBUNGSGAS UND ZUGEHÖRIGES VERFAHREN
SYSTEM FOR CHARACTERISING PARTICLES IN THE FORM OF AN AEROSOL IN AN AMBIENT GAS AND ASSOCIATED METHOD

(30) Priorité: 10.07.2020 FR 2007326
(43) Date de publication de la demande: 17.05.2023
(73) Titulaire: Commissariat à l'énergie atomique et aux énergies alternatives, 75015 Paris (FR); Centre National de la Recherche Scientifique, 75016 Paris (FR)
(72) Inventeur: SUBLEMONTIER, Olivier, 91191 GIF-SUR-YVETTE Cedex (FR); ALVAREZ-LLAMAS, Cesar, 91191 GIF-SUR-YVETTE Cedex (FR)
(74) Mandataire: Gevers & Orès
(86) Numéro de dépôt international: PCT/EP2021/069229
(87) Numéro de publication internationale: WO 2022/008746

(56) Documents cités:
- WO-A2-2021/061247
- CN-A- 111 044 420
- US-B1- 10 393 587
- TJÄRNHAGE TORBJÖRN ET AL: "Development of a laser-induced breakdown spectroscopy instrument for detection and classification of single-particle aerosols in real-time", OPTICS COMMUNICATIONS, vol. 296, 11 February 2013 (2013-02-11), AMSTERDAM, NL, pages 106 - 108, XP055787905, ISSN: 0030-4018, DOI: 10.1016/j.optcom.2013.01.044
- CARRANZA J E ET AL: "On-line analysis of ambient air aerosols using laser-induced breakdown spectroscopy", SPECTROCHIMICA ACTA. PART B: ATOMIC SPECTROSCOPY, NEW YORK, NY, US, US, vol. 56, no. 6, 29 June 2001 (2001-06-29), pages 851 - 864, XP027379641, ISSN: 0584-8547, [retrieved on 20010629]
- VIVEK KUMAR SINGH ET AL: "Prospects for laser-induced breakdown spectroscopy for biomedical applications: a review", LASERS IN MEDICAL SCIENCE, SPRINGER-VERLAG, LO, vol. 26, no. 5, 28 April 2011 (2011-04-28), pages 673 - 687, XP019935702, ISSN: 1435-604X, DOI: 10.1007/S10103-011-0921-2

## Description

### Domaine technique de l'invention

La présente invention se rapporte au domaine de la caractérisation d'aérosols. Les aérosols sont composés de particules de tailles variables en suspension dans un gaz ambiant, par exemple l'air environnant.

Les aérosols en question peuvent, à titre d'exemples non limitatifs, être issus d'un dispositif industriel (ex. : fumées), d'une source accidentelle (ex. : incendie) ou encore de l'air ambiant pour lequel la source d'aérosols n'est pas nécessairement identifiée.

Actuellement, on utilise généralement des procédés fonctionnant par impaction. L'impaction est un principe de collection de particules d'un aérosol qui est largement répandu. Il consiste à aspirer, dans un logement, l'air environnant susceptible de contenir un aérosol à un débit contrôlé et fixe pour recueillir des particules sur un support. Après une campagne de collecte, on peut ainsi récupérer le support et en faire une analyse, a posteriori.

Ainsi, on trouve dans la littérature, des dispositifs d'impaction opérant en « cascade ». Un exemple détaillé de conception d'un tel dispositif est présenté dans l'article de Misra & al., « Development and évaluation of a personal cascade impactor sampler (PCIS) », Aerosol Science 33 (2002), 1027-1047. Le dispositif consiste en plusieurs étages d'impaction agencés en série le long de l'écoulement du flux d'air. Les plus grosses particules, à savoir les plus massiques, comprises dans l'air ambiant impactent le premier étage. Les autres particules passent à travers ce première étage et les particules les plus grosses restantes impactent alors au niveau du deuxième étage et ainsi de suite. Les différents étages, qui définissent le principe de « cascade » permettent donc de collecter des particules de tailles variées. Un tel dispositif permet donc de connaître la taille des particules impactées à chaque étage après la campagne de collecte.

Avec ce type de dispositif, il n'est donc pas possible d'effectuer une analyse en temps réel, puisqu'il convient d'attendre la fin de la campagne de collection. De plus, le dispositif employé ne permet que de classer les particules par leurs tailles, typiquement comprises entre quelques dizaines de nm et quelques microns. Des prélèvements doivent dont être effectuées pour caractériser les particules avec d'autres techniques de mesure, notamment pour obtenir, a posteriori et en laboratoire, la forme, la nature chimique ou encore la concentration des particules. Il existe cependant des dispositifs de caractérisation en temps réel de particules contenues dans l'air environnant. Par exemple, la société PLAIR propose le dispositif dénommé RAPID-E permettant une analyse en temps réel. On pourra, pour plus d'informations, se référer au document US 2019/033191 A1. Le principe de mesure est basé sur la fluorescence induite par une particule soumise à un faisceau laser (parfois désigné sous l'acronyme SLS pour *« Static Light Scattering »* dans la terminologie anglo-saxonne). On analyse alors la répartition angulaire du signal diffusé par la particule par une mesure de la répartition de l'intensité au niveau d'un photodétecteur. Ce type de dispositif permet d'accéder à la taille et à la morphologie des particules. Toutefois, pour obtenir ces informations, cela nécessite de connaître, au préalable, les propriétés optiques du matériau formant les particules considérées, i.e. leur nature chimique. En pratique, il convient donc de savoir ce qu'on prélève. Des dispositifs de mesures spectroscopiques obtenues par création de plasma induit par laser utilisables en temps réel sont décrits dans la publication TJärnhage Torbjörn et AI. : "Development of a laser-induced breakdown spectroscopy instrument for détection and classification of single-particle aérosols in real-time", OPTICS COMMUNICATIONS, vol. 296, 11 février 2013, pages 106-108, AMSTERDAM, NL, ISSN: 0030-4018, DOI: 10.1016/ j.optcom.2013.01.044, le document CN 111 044 420 A et la publication Carranza J. E. et AI. : "On-line analysis of ambient air aérosols using laser-induced breakdown spectroscopy", SPECTROCHIMICA ACTA. PART B: ATOMIC SPECTROSCOPY, NEW YORK, NY, US, US, vol. 56, no. 6, 29 juin 2001, pages 851-864, ISSN: 0584-8547.

### Résumé de l'invention

Un objectif de l'invention est de proposer une solution pour caractériser un aérosol en temps réel et in situ plus performante que les solutions existantes.

A cet effet, l'invention propose un système de caractérisation de particules se présentant sous la forme d'un aérosol dans un gaz ambiant, comprenant
- une chambre ;
- un moyen de pompage du gaz présent dans la chambre afin de faire régner le vide dans cette chambre ;
- un échantillonneur apte à prélever le gaz ambiant susceptible de comporter des particules sous forme d'aérosol ;

- un dispositif de caractérisation desdites particules par spectrométrie de plasma induit par laser, le dispositif comportant :
   un système pour générer, à partir du gaz issu de l'échantillonneur, un jet desdites particules dans la chambre,
   un laser apte à émettre un faisceau laser sous la forme d'impulsions, auquel est associé un dispositif optique agencé pour focaliser ledit faisceau laser dans la chambre, perpendiculairement à une direction de propagation du jet de particules, pour créer, dans un volume focal, un plasma par l'interaction entre le faisceau laser et les particules du jet, ledit plasma émettant d'autres particules, caractéristiques de l'interaction entre le faisceau laser et lesdites particules du jet,
   au moins un dispositif de détection comportant un moyen pour collecter les particules émises par le plasma et un moyen pour effectuer une analyse spectrométrique de ces particules ; caractérisé en ce que le système comprend :
      - au moins un moyen dit de dilution pour diminuer la concentration des particules sous forme d'aérosol du gaz ambiant prélevé par l'échantillonneur, pour faire en sorte que le volume focal ne comprenne au plus qu'une particule individuelle.

Le système selon l'invention pourra comprendre l'une au moins des caractéristiques suivantes, prises seules ou en combinaison :
- ledit moyen de dilution est situé entre une zone de prélèvement du gaz ambiant susceptible de contenir des particules sous forme d'aérosol de l'échantillonneur et le dispositif de caractérisation desdites particules par spectrométrie de plasma induit par laser ;
- ledit moyen de dilution appartient à l'échantillonneur ;
- un moyen de dilution additionnel agencé entre l'échantillonneur et le dispositif de caractérisation desdites particules par spectrométrie de plasma induit par laser ;
- le système comprend un processeur configuré pour commander le moyen de dilution, et éventuellement le moyen de dilution additionnel, en fonction des données fournies par le dispositif de détection du dispositif de caractérisation des particules par spectrométrie de plasma induit par laser ;
- le dispositif de détection comporte une pluralité de N fibres optiques, avec N un entier naturel strictement supérieur à l'unité, une extrémité de chaque fibre optique étant agencée autour du volume focal et pointant vers ce volume focal pour assurer la collection des particules émises par le plasma ;
- lesdites fibres optiques sont montées sur une paroi externe, de forme sphérique, de la chambre ;
- le moyen pour effectuer une analyse spectrométrique des particules émises par le plasma comporte :
   au moins un filtre de type coupe-bande, apte à assurer un filtrage dans une bandes de longueurs d'ondes données, et
   au moins un photodétecteur, par exemple de type photomultiplicateur d'électrons ;
- le moyen pour effectuer une analyse spectrométrique des particules émises par le plasma comporte :
   une pluralité de filtres de type coupe-bande, apte à assurer un filtrage dans une bandes de longueurs d'ondes distinctes les unes des autres, et
   un photodétecteur, par exemple de type photomultiplicateur d'électrons, associé à chaque filtre coupe-bande ;
- le moyen pour effectuer une analyse spectrométrique des particules émises par le plasma comporte :
   un spectrographe optique, équipé :
   d'une caméra de type dispositif à transfert de charge intensifié.
- le système comprend un autre dispositif de détection comportant :
   une pluralité d'ensembles optiques, montés sur la chambre et répartis angulairement autour de cette chambre, pour collecter les particules émises par le plasma, et
   au moins un photodétecteur relié à ladite pluralité d'ensembles optiques pour analyser la répartition angulaire desdites particules ;
- le système comprend une caméra infrarouge agencée pour mesurer une évolution de température des particules du jet de particules.

L'invention concerne également un procédé de mise en oeuvre d'un système selon l'invention, ledit procédé comprenant les étapes suivantes :
a) prélever un gaz ambiant, lequel est susceptible de comporter des particules sous forme d'aérosol en une concentration en nombre à caractériser ;
b) détecter lesdites particules par spectrométrie de plasma induit par laser, chaque détection consistant en une détection d'au plus une particule individuelle dans ledit volume focal ;
c) compter, par unité de temps, le nombre de particules détectées à l'étape b); et
d) déterminer la concentration en nombre desdites particules dans le gaz ambiant prélevé, à partir d'une comparaison entre les données issues de l'étape c) et une base de données reliant ladite concentration en nombre audit comptage par unité de temps.

On pourra par ailleurs prévoir, entre l'étape a) et l'étape b), une étape consistant à diminuer de manière contrôlée la concentration des particules présentes sous la forme d'un aérosol dans le gaz ambiant prélevé pour faire en sorte que le volume focal ne comprenne au plus qu'une particule individuelle.

### Brève description des figures

D'autres caractéristiques et avantages de l'invention apparaitront au cours de la lecture de la description détaillée qui va suivre pour la compréhension de laquelle on se reportera aux dessins annexés et pour lesquels :
[Fig. 1] La figure 1 est une vue schématique globale d'un système de caractérisation des particules d'un aérosol conforme à l'invention ;
[Fig. 2] La figure 2 représente un échantillonneur, appartenant au système schématisé sur la figure 1, pour prélever l'aérosol dans un gaz environnant ;
[Fig. 3] La figure 3 représente un dispositif de caractérisation des particules d'un aérosol, appartenant au système schématisé sur la figure 1, et fonctionnant par spectrométrie de plasma induit par laser ;
[Fig. 4] La figure 4 représente de façon schématique une zone d'interaction, au sein du dispositif représenté sur la figure 3, entre un faisceau laser et un jet de particules formé avec les particules d'aérosol provenant de l'échantillonneur de la figure 2;
[Fig. 5a] La figure 5a est une vue en perspective, externe, d'une partie du dispositif de caractérisation représenté sur la figure 2, partie sur laquelle on a représenté un moyen de collecte, se présentant sous la forme d'une pluralité de fibres optiques, de particules générées par une interaction entre un faisceau laser dudit dispositif avec les particules de l'aérosol ;

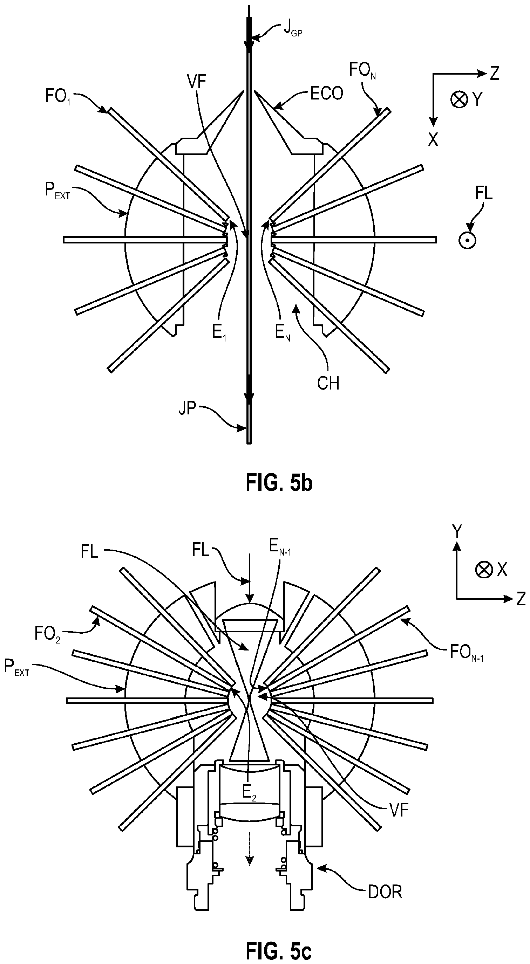

[Fig. 5b] La figure 5b est une vue dans un premier plan de coupe de la figure 5a ;
[Fig. 5c] La figure 5c est une vue dans une deuxième plan de coupe de la figure 5a ;
[Fig. 5d] La figure 5d est une vue dans un troisième plan de coupe de la figure 5a ;
[Fig. 6a] La figure 6a est une représentation schématique d'un dispositif de détection, comprenant le moyen de collecte à fibres optiques représenté sur les figures 5a à 5d ;
[Fig. 6b] la figure 6b est une représentation schématique d'une variante de dispositif de détection, comprenant également le moyen de collecte à fibres optiques représenté sur les figures 5a à 5d ;
[Fig. 7] La figure 7 est une vue agrandie prise selon un plan de coupe P-P du dispositif représenté sur la figure 2, sur laquelle on a représenté un autre moyen de collecte, complémentaire à celui qui est représenté sur les figures 5a à 5d et formé d'un ensemble de collecteurs optiques aptes à recueillir les particules générées par l'interaction entre le faisceau laser et les particules de l'aérosol ;
[Fig. 8] La figure 8 représente un moyen d'analyse des particules collectées par le moyen de collecte de la figure 7;
[Fig. 9] La figure 9 est une vue agrandie du dispositif représenté sur la figure 2, dans un autre plan de coupe ;
[Fig. 10] La figure 10 représente est une autre vue du dispositif représenté sur la figure 2, dans un autre plan de coupe, par ailleurs également différente du plan de coupe de la figure 9.

### Description détaillée de l'invention

Dans toute la description qui suit, (O, X, Y, Z) définit un repère orthogonal direct.

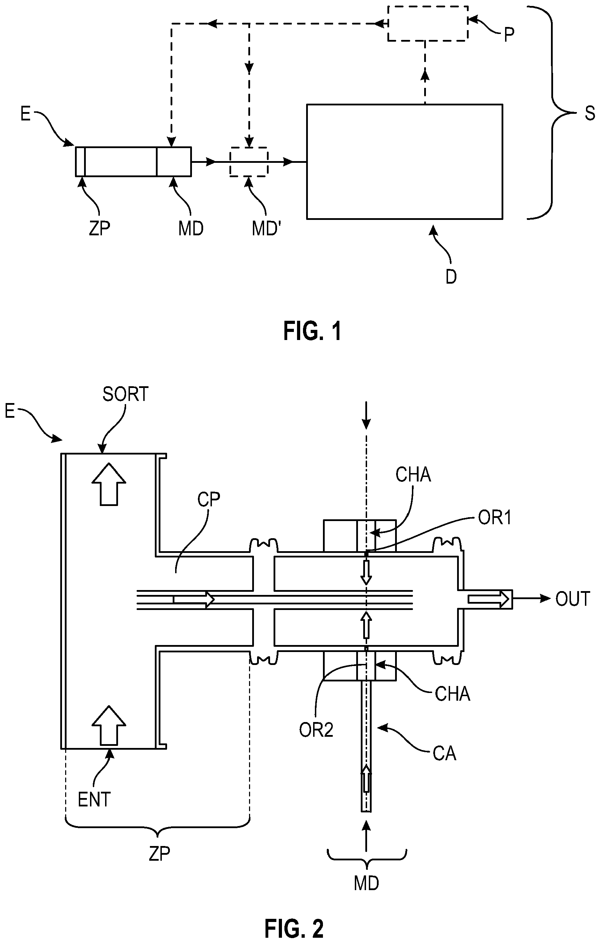

L'invention concerne un système S de caractérisation des particules d'un aérosol. Comme cela est schématiquement représenté sur la figure 1, ce système S comprend un échantillonneur E apte à prélever un gaz ambiant susceptible de comporter des particules sous forme d'aérosol, un dispositif D de caractérisation desdites particules par spectrométrie de plasma induit par laser (la spectrométrie de plasma induit par laser est plus connue sous l'acronyme LIBS pour *« Laser-Induced Breakdown Spectroscopy »* dans la terminologie anglo-saxonne), ainsi qu'au moins un moyen MD, MD' dit de dilution pour diminuer la concentration des particules sous forme d'aérosol du gaz ambiant prélevé par l'échantillonneur E.

Sur la figure 2, on a représenté, selon une vue en coupe un exemple d'échantillonneur E susceptible d'être employé dans le cadre de l'invention.

L'échantillonneur E comprend une zone de prélèvement ZP du gaz environnant. Cette zone de prélèvement ZP se présente par exemple sous la forme d'un cylindre creux CC avec une entrée ENT, une sortie SORT et une conduite de prélèvement CP débouchant dans le cylindre creux CC. Le diamètre de la conduite de prélèvement CP est nettement plus faible que le diamètre du cylindre creux CC.

Dans le cas d'espèce, l'échantillonneur E a ceci de particulier qu'il intègre par ailleurs en son sein le moyen de dilution MD. Ce moyen de dilution MD se présente par exemple sous la forme d'une ou plusieurs conduite(s) additionnelle(s) CA débouchant avantageusement dans une chambre annulaire CHA en connexion avec la conduite de prélèvement CP par l'intermédiaire d'une pluralité d'orifices OR1, OR2 répartis sur le contour interne de la chambre annulaire CHA. La dilution permet d'apporter, dans la conduite de prélèvement CP, un débit de gaz supplémentaire au gaz prélevé au niveau de la zone de prélèvement ZP. Le gaz ne comporte pas de particules sous forme d'aérosols. Ce gaz peut être de l'air, de l'argon ou encore de l'azote. Par ailleurs, cet apport s'effectue de manière relativement homogène grâce à la chambre annulaire CHA (qui, par exemple, pourraient, par un apport de débit de gaz de dilution asymétrique, être déviées vers les parois de la conduite en question et y rester collées, pour au final obstruer la conduite) et ses orifices OR1, OR2, en limitant les pertes de particules.

Par exemple, on peut prévoir une conduite CP de prélèvement dont le diamètre est de 4 millimètres. Le débit prélevé par cette conduite CP est faible, par exemple compris entre 0,11/mn et 0,2 l/mn (conditions CNTP : Conditions Normales de Température et de Pression) en fonction de la nature de la lentille aérodynamique LA choisie pour le dispositif D. On peut prévoir une chambre annulaire CHA de longueur de 120mm, de diamètre intérieur de 40mm avec 12 orifices répartis de façon régulière sur la circonférence intérieure de la chambre annulaire CHA, chaque orifice présentant un diamètre de 1mm. Ainsi, avec cette conception, on a pu déterminer des pertes théoriques d'environ 0,5% de particules pour un taux de dilution de 90% (apport de débit via les orifices de la chambre annulaire) et des pertes théoriques de l'ordre du 1% pour un taux de dilution de 50%.

En sortie OUT de l'échantillonneur E, le gaz véhiculant les particules d'aérosol, éventuellement dilué, est alors dirigé vers une zone d'entrée ZE du dispositif D de caractérisation desdites particules par spectrométrie de plasma induit par laser. La conduite reliant la sortie de la chambre annulaire CHA, donc celle de l'échantillonneur E est, en reprenant l'exemple mentionné ci-dessus, de 10mm.

Optionnellement, on peut envisager un moyen MD' de dilution supplémentaire. Dans ce cas, ce moyen de dilution MD' supplémentaire est agencé entre l'échantillonneur E et le dispositif D de caractérisation desdites particules par spectrométrie de plasma induit par laser. Par exemple, on peut prévoir un dispositif de dilution vendu dans le commerce tel que le VKL10 E proposé par la société PALAS.

Dans le cadre de l'invention, le moyen de dilution MD, MD' joue un rôle dans la détermination de la concentration en nombre en particules (nombre de particules par unités de volume) dans l'aérosol présent dans le gaz prélevé par l'échantillonneur (concentration qui n'est pas connue dans le gaz prélevé et qu'on cherche justement à déterminer). En effet, pour cela, il convient de s'assurer que le dispositif D de caractérisation des particules par spectrométrie de plasma induit par laser n'analyse à la fois qu'au plus une particule individuelle (i.e. au plus une seule particule).

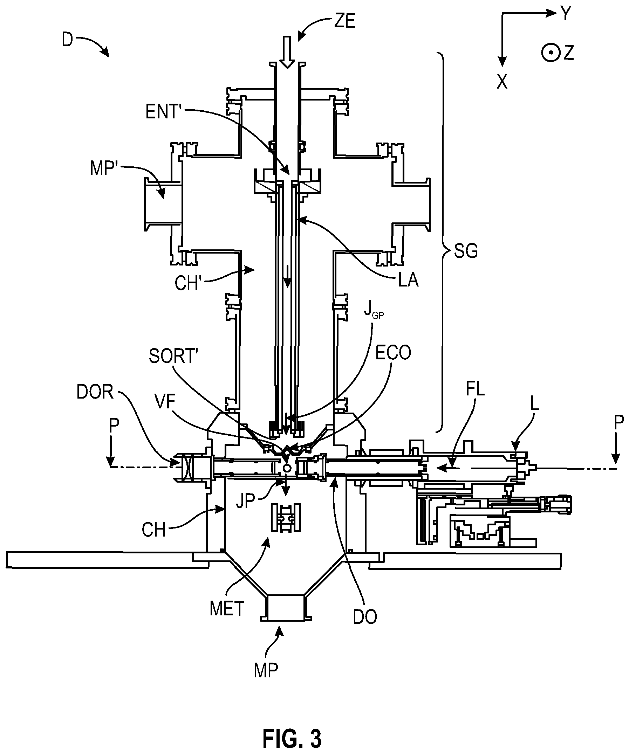

L'intérêt du moyen de dilution dans ce but pourra être mieux expliqué après avoir décrit plus amplement le dispositif D en question, à l'appui des figures 3 et suivantes.

Sur la figure 3, on a représenté plus précisément le dispositif D de caractérisation desdites particules par spectrométrie de plasma induit par laser (LIBS).

Le dispositif D comporte un système SG pour générer, à partir du gaz issu de l'échantillonneur E, un jet de particules JP dans une chambre CH à laquelle est associé un moyen de pompage MP du gaz présent dans la chambre afin de faire régner le vide dans cette chambre. Typiquement, la pression régnant dans la chambre CH peut être de l'ordre de 0,05mbar voire moins.

Le système SG peut par exemple comporter une lentille aérodynamique LA, une chambre CH' mise sous vide au moyen d'un moyen de pompage MP' et avantageusement un écorceur ECO. La lentille aérodynamique LA est alimentée, en entrée ENT', par le gaz prélevé, et éventuellement dilué, susceptible de contenir des particules sous forme d'aérosol et provenant de l'échantillonneur E. En sortie SORT' de la lentille aérodynamique LA, un jet J_{G} de particules dans un gaz porteur est alors généré dans la chambre de détente CH' notamment grâce au fait qu'elle est sous vide - typiquement la pression est de l'ordre de 0,5mbar voire moins. Le jet J_{G} de particules dans un gaz porteur passe alors par un écorceur ECO qui a pour effet de supprimer l'essentiel du gaz porteur si bien qu'après l'écorceur, à savoir dans la chambre CH, ne reste qu'un jet de particules JP.Avec une lentille aérodynamique, on peut typiquement avoir un vide dans la chambre CH défini par une pression comprise entre 10⁻³ mbar et 1mbar. Cela permet d'assurer un fonctionnement optimal.

En lieu et place de la lentille aérodynamique, on pourrait prévoir une tuyère (non représenté). Avec une tuyère, dans le même objectif d'assurer un fonctionnement optimal, on peut typiquement avoir un vide dans la chambre CH défini par une pression comprise entre 10⁻³ mbar et 1mbar.

Le dispositif D comprend également un laser L apte à émettre un faisceau laser FL sous la forme d'impulsions.

A ce laser L est associé un dispositif optique DO agencé pour focaliser le faisceau FL dans la chambre CH, perpendiculairement à la direction DP de propagation du jet de particules JP.

Ceci permet de créer, dans un volume focal VF, un plasma par l'interaction entre le faisceau laser FL et les particules N_{P} du jet JP de particules, plasma qui émet d'autres particules, caractéristiques de l'interaction entre le faisceau laser FL et les particules du jet. Ces autres particules peuvent être des ions, des élections ou des photons.

On pourra notamment se référer à la figure 3.

Le fait de fonctionner sous vide dans la chambre CH où l'interaction entre le faisceau laser FL et les particules N_{P} du jet JP prend place permet de détecter des particules de tailles très faibles, typiquement inférieures à quelques centaines de nanomètres et notamment de taille inférieure à 200nm et même de taille inférieure à 100nm, sans difficultés. Cela a déjà pu être rapporté avec des nanoparticules d'Or avec des tailles de l'ordre de 15nm.

Le Laser L peut par exemple être un laser à fibre.

Sa fréquence de répétition (des impulsions) peut généralement être comprise entre 1kHz et 1 Mhz. Une fréquence de répétition minimum présente un intérêt pour pouvoir caractériser un certain nombre de particules d'aérosol prélevé en un temps raisonnable. Une fréquence de répétition nettement plus élevée de l'ordre du Mhz peut présenter un intérêt lorsque la concentration en particules dans le gaz prélevé par l'échantillonneur est relativement faible et ce, afin d'augmenter le taux de comptage de particules par unité de temps.

L'intensité minimale à mettre en oeuvre au niveau du volume focal est typiquement de l'ordre de 10GW/cm². Cela correspond à peu près à l'intensité nécessaire pour produire un plasma dans le volume focal VF. Pour obtenir cela, on peut évidemment jouer sur les caractéristiques intrinsèques du laser L, mais aussi en variante ou en complément sur les caractéristiques du dispositif optique DO.

Le dispositif optique DO peut en particulier se présenter sous la forme de lentilles optiques ou tout simplement, d'un objectif de microscope.

Typiquement, un laser L fibré fonctionnant à 1065nm, avec une énergie par impulsion d'environ 0,2mJ, associé à un objectif DO de microscope de grossissement x10, permet d'obtenir cette intensité minimum de 10GW/cm² dans le volume focal VF.

Au-delà du volume focal VF, donc après interaction avec les particules du jet JP de particules, le faisceau laser FL est avantageusement recollimaté par un dispositif DOR optique dit de recollimation, se présentant par exemple sous la forme d'un jeu de lentilles. Le faisceau laser FL ainsi recollimaté peut alors être envoyé vers un moyen (non représenté sur les figures annexées) capable de mesurer la puissance du faisceau laser FL. Ceci permet de s'assurer, a posteriori, que la puissance théoriquement injectée par le laser L est bien celle fournie par ce laser L.

Le dispositif D comprend aussi au moins un dispositif de détection DD comportant un moyen MC pour collecter les particules émises par le plasma et un moyen MAS pour effectuer une analyse spectrométrique de ces particules.

Le moyen MC pour collecter les particules émises par le plasma peut faire l'objet de diverses conceptions.

Toutefois, dans le cadre de l'invention, on pourra avantageusement envisager, comme moyen de collecte, une pluralité de N fibres optiques FO₁, FO₂, FO₃, ..., FO_{N-1}, FO_{N}, avec N un entier naturel strictement supérieur à l'unité, une extrémité E₁, E₂, E₃,..., E_{N-1}, E_{N} de chaque fibre optique FO₁, FO₂, FO₃, ..., FO_{N-1}, FO_{N} étant à cet effet agencée autour du volume focal VF et pointant vers ce volume focal VF.

L'intérêt de prévoir une multitude de fibres optiques est de pouvoir, notamment en référence à l'utilisation d'une fibre optique unique pour la collection des particules émises par le plasma, démultiplier le nombre de particules collectées. Ceci permet alors d'augmenter la sensibilité du dispositif DD de détection. On comprendra que plus le nombre de fibres optiques est grand, et plus cette sensibilité augmente. Avantageusement, on pourra par ailleurs prévoir une chambre CH dont la paroi externe P_{EXT} est de forme sphérique. Dans ce cas, les fibres optiques FO, montées sur la paroi de la chambre CH, peuvent être agencées sur cette sphère pour couvrir au mieux l'angle solide maximum de 4π stéradians autour du volume focal VF où le plasma est généré. Cet agencement permet, par rapport à tout autre et pour un nombre N donné de fibres optiques de collection, d'augmenter la sensibilité du dispositif de détection DD. L'extrémité de chaque fibre optique FO₁, FO₂, FO₃, ..., FO_{N-1}, FO_{N} sera typiquement située à une distance de quelques millimètres du centre du volume focal VF, la valeur exacte dépendant, pour maintenir un même angle solide de collection, du diamètre de coeur des fibres optiques employées.

A titre d'exemple non limitatif, voici un exemple d'implémentation possible. N = 158 fibres optiques montées sur une paroi externe P_{EXT} sphérique de la chambre CH. Chaque fibre optique présente un diamètre de coeur de 1mm. Un tel montage permet, théoriquement, de collecter 44% de toutes les particules émises par le plasma lorsque les extrémités E₁, E₂, E₃,..., E_{N-1}, E_{N} respectives des différentes fibres optiques sont disposées entre 4mm et 6mm du centre du volume focal VF. En référence à un moyen de collecte comportant une fibre optique unique, dont le diamètre de coeur est de 600 microns et dont l'extrémité de collecte est située à 4mm du centre du volume focal VF, on multiplie théoriquement par 317 la quantité de particules émises par le plasma qui sont collectées.

Différentes options sont envisageables pour le moyen MAS, MAS' d'analyse spectrométrique.

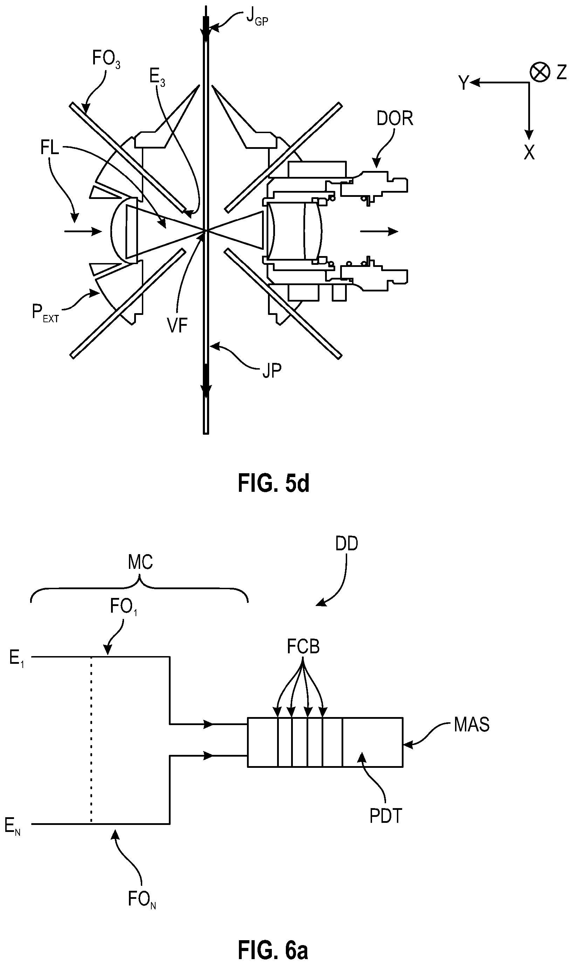

Ainsi, selon une première option représentée sur la figure 6(a), on peut envisager un moyen d'analyse spectroscopique MAS comprenant au moins un filtre FCB de type coupe-bande, aptes à assurer un filtrage dans une bande de longueurs d'ondes donnée et au moins un photodétecteur PDT, par exemple de type photomultiplicateur d'électrons. On peut par exemple employer le PMT H12775 proposé par la société Hamamatsu, cf. https://www.hamamatsu.com/eu/en/product/type/H12775/index.html.

Le filtre coupe-bande sélectionne ainsi un domaine spectral propre et l'intensité de la lumière (parmi les particules émises par le plasma, on trouve des photons) dans ce domaine spectral est déterminée par le photodétecteur PDT.

Par exemple, si l'on considère 4 bandes spectrales A, B, C et D, on obtiendra ainsi l'intensité du signal dans chacune des bandes considérées, à savoir respectivement I_{I}, avec I = A, B, C ou D selon la bande spectrale considérée. A cet effet, il convient alors de prévoir une pluralité de filtres FCB coupe-bande assurant une sélection dans des bandes distinctes et autant de photodétecteurs PDT, notamment de type photomultiplicateur d'électrons, qu'il y a de filtres FCB.

On peut aussi mesurer l'intensité globale I_{G} du signal, i.e. l'intensité prise pour toutes les bandes A, B, C et D et sur un temps d'accumulation long.

On peut aussi, pour chaque bande spectrale A, B, C et D considérée, compter le nombre d'événements N_{EI}, avec I = A, B, C ou D selon la bande spectrale considérée (indépendamment de toute mesure d'intensité).

Ces différentes données, N_{EI}, I_{I}, et I_{G} sont liées à des grandeurs physiques distinctes des particules du jet de particules qui sont analysées.

Ainsi, le nombre d'événements N_{EI} peut être relié au nombre de particules du jet de particules qui sont détectées, connaissant le taux de dilution appliqué avec le moyen de dilution MD, MD' pour faire en sorte qu'au plus une particule individuelle (i.e. au plus une seule particule) soit présente dans le volume focal VF.

Ceci sera détaillé dans la suite de la description.

On peut ainsi déterminer le nombre de particules dans le gaz prélevé par l'échantillonneur E, à savoir une concentration en nombre des particules (i.e. un nombre de particules par unité de volume) dans le gaz prélevé par l'échantillonneur E.

De plus, I_{I} est proportionnel au nombre d'atomes d'un élément chimique donné présent dans la particule individuelle analysée, c'est-à-dire, à la proportion de l'élément chimique correspondant dans la particule individuelle analysée. On comprend donc incidemment que la comparaison des intensités mesurées dans les différentes bandes spectrales A, B, C et D permet d'obtenir les proportions respectives des différents éléments chimiques (au nombre de 4 si on une intensité sur les 4 bandes spectrales précitées) présents dans la particule individuelle analysée.

Par ailleurs, lorsqu'il n'y a qu'un seul élément chimique présent dans la particule individuelle analysée, alors le signal I_{I} ne dépend que de la taille de la particule individuelle analysée. En conséquence, la détermination de la valeur moyenne de l'intensité I_{I} sur un grand nombre d'événements est proportionnelle à la taille moyenne des différentes particules individuelles successivement analysées dans le gaz prélevé par l'échantillonneur E. Et c'est d'ailleurs cette donnée de taille moyenne qui est représentative.

De plus, l'intensité globale I_{G} est proportionnelle au nombre d'atomes présents dans la particule individuelle analysée. On peut ainsi, par ce biais, déterminer une concentration en masse de particules dans le gaz prélevé par l'échantillonneur E.

Il est donc possible, par exemple dans le cas d'une surveillance atmosphérique sur des aérosols d'une nature chimique donnée, d'obtenir, la concentration en masse, la concentration en nombre, et la taille moyenne des particules présents dans l'aérosol.

D'un point de vue pratique, cela peut s'effectuer après étalonnage du type d'aérosol que l'on cherche à détecter pour différentes tailles de particules. Cet étalonnage doit être réalisé au préalable en laboratoire pour pouvoir ensuite, sur le terrain, déterminer l'ensemble de ces données.

Par ailleurs, il convient de noter que le temps de réponse d'un photodétecteur de type photomultiplicateur d'électrons est très faible, typiquement de l'ordre de quelques nanosecondes. Ce type de détection est donc particulièrement bien adapté avec l'emploi d'un laser à fonctionnement impulsionnel présentant une fréquence de répétition élevée, comme c'est le cas dans le cadre de l'invention. Aucune précaution particulière n'est donc à prendre pour éviter que le temps de réponse/accumulation du photodétecteur PDT soit au-delà d'un cycle du laser (cycle = temps entre deux impulsions du laser).

L'efficacité de la mesure peut encore être améliorée lorsque l'on sait quel type de particule forme l'aérosol. Dans ce cas, il est en effet avantageux de limiter le temps de mesure au temps pendant lequel le plasma émet des particules (connu par expérience), parmi lesquelles des photons, en bloquant l'accumulation fait par le ou chaque photodétecteur PDT dès que le plasma n'émet plus de particules. Ceci peut parfaitement être synchronise avec le fonctionnement du laser L à fonctionnement impulsionnel. Ceci permet alors d'augmenter le rapport signal/bruit, en limitant le temps d'accumulation du signal au strict nécessaire. Toute mesure d'intensité sur le signal en est donc meilleure.

Si l'on reprend notre exemple, compte tenu du nombre N = 158 de fibres optiques disponibles, on notera qu'il est envisageable, si par exemple, on souhaite réaliser, en même temps, une détection dans 4 bandes spectrales différentes (par exemple les bandes A, B, C et D discutées précédemment, aptes à caractériser 4 particules de natures différentes du jet de particules), de prévoir 4 filtres interférentiels et dans ce cas de faire venir sur chaque filtre interférentiel, les particules émises par le plasma collectées par, par exemple, 40 fibres optiques pour 3 des 4 filtres interférentiels et 38 fibres optiques pour le 4^{ème} filtre interférentiel.

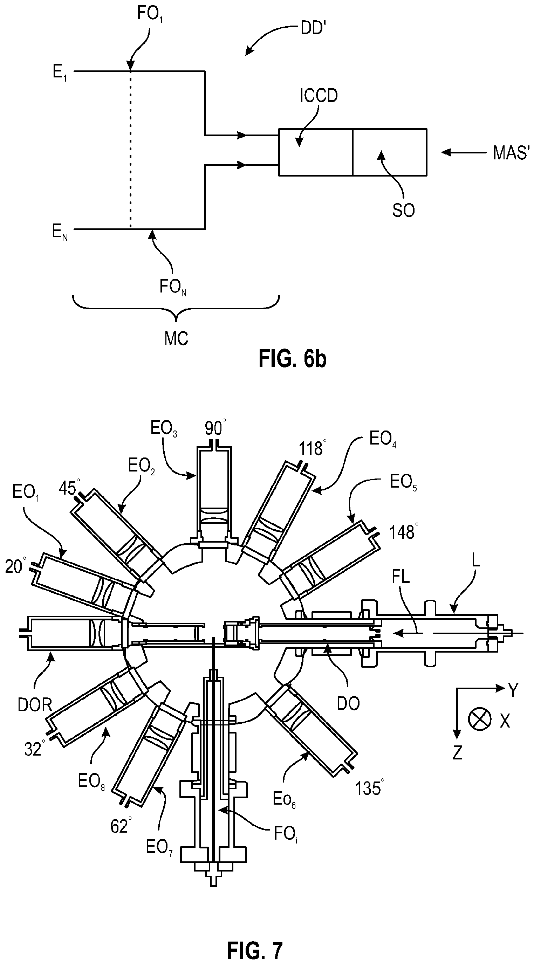

Selon une deuxième option représentée sur la figure 6(b), on peut envisager un moyen d'analyse spectroscopique MAS' comportant un spectrographe optique SO équipé d'une caméra de type dispositif à transfert de charge intensifié ICCD. Cette deuxième option permet une analyse spectrale complète dans une gamme très étendue de longueur d'onde.

Elle permet aussi une quantification des éléments chimiques présents dans les particules individuelles du jet de particules qui sont analysées - après étalonnage en laboratoire.

Cette option permet finalement d'accéder aux mêmes informations que celles obtenues avec la première option à savoir une concentration en masse, une concentration en nombre et une taille des particules d'aérosol.

En pratique, l'intensité I_{G} peut être obtenue en sélectionnant un mode nommé « accumulation » sur la caméra ICCD.

En revanche, pour obtenir I_{I} et N_{IE} (avec I = A, B, C ou D si l'on reprend l'exemple présenté ci-dessus), il convient d'employer un mode de fonctionnement spécifique de la caméra ICCD pour palier à la lenteur d'acquisition de cette caméra. En effet, le temps de réponse de ce type de caméra est de l'ordre de la centaine de millisecondes, temps qui n'est pas nécessairement compatible avec l'emploi d'un laser impulsionnel fonctionnant à une fréquence de répétition élevée. Aussi, le temps d'accumulation de la caméra ICCD doit être maintenu inférieur à la durée séparant deux impulsions laser successives, en prenant dûment en compte le temps de retard entre une impulsion laser et le début d'acquisition par la caméra ICCD, la largeur de la porte à savoir le temps pendant lequel la caméra ICCD accumule le signal et le temps de lecture de la caméra ICCD, à savoir le temps pendant lequel l'électronique associé à la caméra lit les informations contenues sur les pixels de la caméra ICCD.

Comme cela a été mentionné précédemment, le moyen de dilution MD, MD' a un rôle pour déterminer la concentration en nombre (i.e. en volume) en particules dans l'aérosol présent dans le gaz prélevé par l'échantillonneur ; ce qui peut être fait correctement qu'en s'assurant que le dispositif D de caractérisation des particules par spectrométrie de plasma induit par laser n'analyse à la fois qu'une particule individuelle dans le volume focal VF.

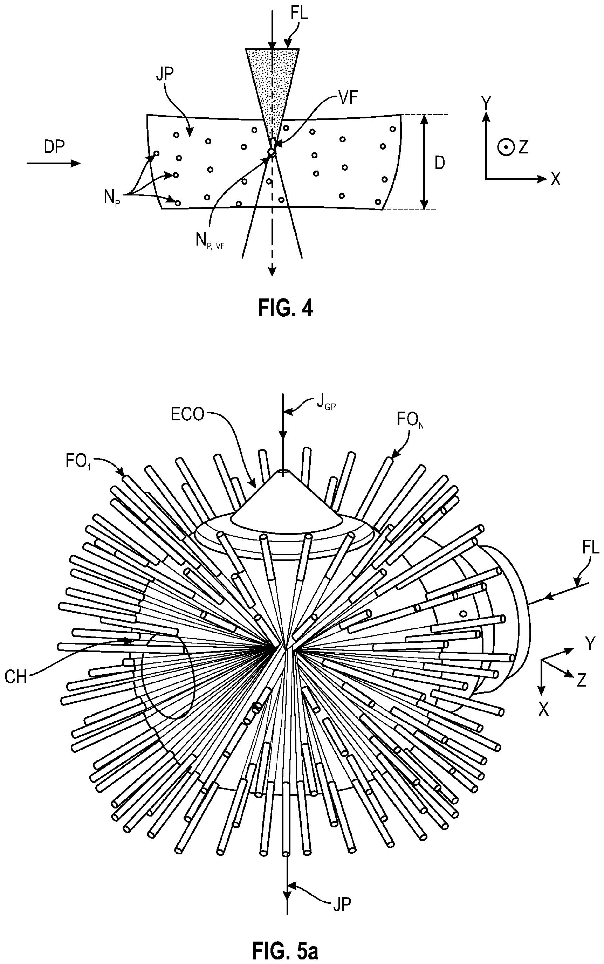

D'un point de vue statistique, il peut être montré que le volume focal VF du dispositif D ne présentera qu'une particule individuelle du jet de particules (cf. figure 4) que si on détecte la présence d'une particule pour, au plus, 1 tir laser sur 10. Si cette valeur est dépassée, alors on peut commander le moyen de dilution MD, et éventuellement MD' en cas de besoin, pour faire en sorte qu'on ne détecte 1 particule que plus que tous les 10 tirs laser. Et c'est d'ailleurs le taux de dilution appliqué avec le moyen de dilution MD, MD', pour obtenir au plus une détection de particule pour 10 tirs laser, qui permet de remonter à la concentration en nombre des particules d'aérosol dans le gaz prélevé par l'échantillonneur E.

Aussi et avantageusement, et comme cela est représenté (en lignes pointillées) sur la figure 1, le système S selon l'invention pourra comprendre un processeur P configuré pour commander le moyen de dilution MD, et éventuellement le moyen de dilution additionnel MD' lorsque celui-ci est prévu et nécessaire, en fonction des données fournies par le dispositif de détection DD (détection d'un nombre de particules tous les 10 tirs laser) du dispositif D de caractérisation des particules par spectrométrie de plasma induit par laser.

Les informations obtenues avec le système S selon l'invention tel qu'il a été décrit précédemment et notamment le dispositif D de caractérisation, à savoir notamment la concentration en masse, en nombre et la taille des particules, peuvent être complétées.

Ainsi, le système S selon l'invention comprend avantageusement, comme représenté sur la figure 7, un autre dispositif de détection ADD comportant :
- une pluralité d'ensembles optiques EO1 à EO8, montés sur la chambre CH et répartis angulairement autour de cette chambre CH, pour collecter les particules émises par le plasma, et
- au moins un photodétecteur PDT' relié à ladite pluralité d'ensembles optiques EO1 à EO8 pour analyser la répartition angulaire desdites particules.

Chaque ensemble optique EO1 à EO8 peut notamment être formé avec des lentilles. Sur la figure 7, on a mentionné un nombre (N = 8) précis d'ensembles optiques, ainsi qu'un positionnement angulaire précis (valeur d'angle) de ces ensembles optiques à pur titre indicatif, mais représentatif d'une implémentation concrètement envisageable.

Cet autre dispositif de détection ADD vise à déterminer la diffusion angulaire d'un faisceau de lumière croisant le jet de particules (parmi lesquelles des photons), plus connue sous l'acronyme SLS pour *« Static Light Scattering »* dans la terminologie anglo-saxonne.

Cette technique, connue en soi, permet de déterminer la taille et la morphologie de particules se présentant sous la forme d'agglomérats, si leurs propriétés optiques sont connues, autrement dit si leur nature chimique est connue. Or justement, la LIBS permet, comme expliqué précédemment, de connaître la nature chimique d'un élément présent dans les particules du jet de particules. Pour cela, on peut employer le laser décrit précédemment, de sorte cependant à ce qu'aucun plasma ne soit généré. A cet effet, on peut notamment travailler avec un faisceau laser continu. On peut aussi et avantageusement prévoir un autre laser fonctionnant à des longueurs d'onde proches du vert ou du bleu.

Les données fournies par SLS permettent par ailleurs de mieux estimer la concentration massique et la concentration en nombre des particules du jet de particules analysées - ce qui peut être confronté aux résultats obtenus par LIBS. Typiquement, des particules sous forme d'agglomérats sont les suies (produits de combustion : moteur thermique, incendie, etc.).

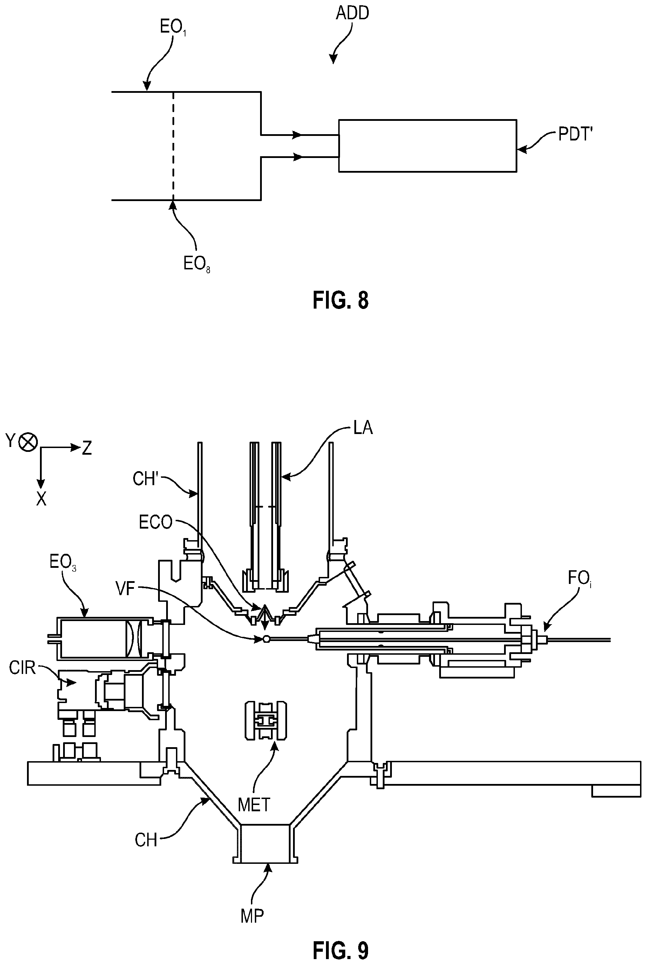

Ainsi également, le système S selon l'invention comprend avantageusement, comme cela est visible sur la figure 9, une caméra sensible dans l'infrarouge CIR, généralement dans le proche infrarouge, agencée pour mesurer une évolution de température des particules du jet de particules.

La caméra CIR permet de mettre en oeuvre la technique connue sous l'acronyme LII *pour « Laser-Induced Incandescence* » dans la terminologie anglo-saxonne.

Pour mettre en oeuvre cette technique, il convient de réduire la puissance fournie par le laser L, par référence à la LIBS. Aucun plasma n'est généré dans le volume focal, mais seulement un échauffement de la particule N_{P} présente dans le volume focal VF. Cette technique vise à déterminer le refroidissement de la particule qui, la chambre CH étant sous vide, ne dépend que de la puissance perdue par rayonnement (pas de convection, pas de conduction). Et cette puissance perdue par rayonnement est liée à la taille des particules considérées ainsi qu'à leur nature chimique. Le refroidissement peut être déterminé temporellement. Toutefois, ici cette mesure s'effectue avantageusement spatialement (le montage de la figure 9 le permet). En effet, les particules sont en vol dans le jet de particules, et sont animées d'une vitesse constante qui peut parfaitement être calculée (notamment à l'aide d'un code de calcul de type CFD pour *« Computational Fluid Dynamics »* selon la terminologie anglo-saxonne) en fonction de leur taille et de leur nature chimique. Comme cette vitesse est relativement importante (typiquement entre 140 et 350 m/s selon la taille et la concentration des particules), et que les particules refroidissent lentement (le rayonnement est le seul contributeur sous vide), la vitesse de refroidissement est mesurée spatialement par la caméra CIR, avantageusement équipée d'un objectif grand angle. Sur la figure 9 d'ailleurs, la caméra est bien située en aval du volume focal VF, si l'on considère le sens de parcours de jet de particules J_{P}. La caméra CIR permet alors de capturer une image de l'émission thermique des particules en vol dans le jet de particules depuis et donc aussi après leur interaction avec le faisceau laser FL dans le volume focal VF. Enfin, il convient de noter qu'il peut être intéressant de collecter les particules pour en faire une analyse ex situ, venant confirmer ou compléter, avec des techniques différentes les résultats obtenus en temps réel avec le système S conforme à l'invention.

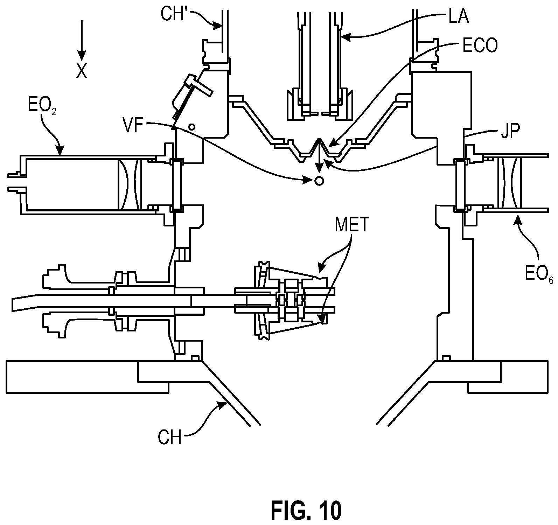

Pour cette raison, et comme cela est notamment visible sur la figure 10, il est utile que le dispositif D prévoit un porte-substrat MET, lequel pourra comprendre d'une part un substrat (le dépôt peut ensuite être employé pour faire de la fluorescence X par exemple) et de part et d'autre de celui-ci, des grilles (pour réaliser de la microscopie électronique de transmission). Le porte-substrat est avantageusement monté à rotation autour de son axe principal et ce, pour pouvoir exposer les grilles au jet de particules sur des durées relativement courtes. En effet, dans le but d'effectuer de la microscopie électronique en transmission permet alors d'étudier l'état d'agglomération réel des particules dans le jet (si on déposait des couches de particules sur ces grilles, comme cela est effectué sur le substrat, cela ne pourrait pas être envisagé).

Parmi les caractérisations possibles, celle qui est relative à la concentration en nombre des particules que l'on cherche à caractériser est particulièrement intéressante dans le cadre de l'invention.

Aussi, l'invention concerne également un procédé de mise en oeuvre d'un système S selon l'invention, ledit procédé comprenant les étapes suivantes :
a) prélever un gaz ambiant, lequel est susceptible de comporter des particules sous forme d'aérosol en une concentration en nombre à caractériser ;
b) détecter lesdites particules par spectrométrie de plasma induit par laser, chaque détection consistant en une détection d'au plus une particule individuelle dans ledit volume focal VF ;
c) compter, par unité de temps, le nombre de particules détectées à l'étape b); et
d) déterminer la concentration en nombre desdites particules dans le gaz ambiant prélevé, à partir d'une comparaison entre les données issues de l'étape c) et une base de données reliant ladite concentration en nombre audit comptage par unité de temps.

On relève que les particules dont on cherche à caractériser la concentration en nombre présentent nécessairement une composition chimique élémentaire donnée.

La base de données est établie en effectuant une calibration dans laquelle, pour différents types de particules d'intérêt, on établit, pour chaque type de particule parmi les différents types de particules, le lien entre la concentration en nombre connue du type de particule concerné et le comptage qui en est effectué. C'est cette base qui permet donc, en utilisation, à partir d'un comptage réalisé sur un prélèvement dont la concentration en nombre d'un type de particules recherché n'est pas connu, de déterminer cette concentration.

Le procédé pourra comporter, entre l'étape a) et l'étape b), une étape consistant à diminuer de manière contrôlée la concentration des particules présentes sous la forme d'un aérosol dans le gaz ambiant prélevé pour faire en sorte que le volume focal VF ne comprenne au plus qu'une particule individuelle.

## Revendications

1. Système (S) de caractérisation de particules se présentant sous la forme d'un aérosol dans un gaz ambiant, comprenant:
- un échantillonneur (E) apte à prélever le gaz ambiant susceptible de comporter des particules sous forme d'aérosol ;
- un dispositif (D) de caractérisation desdites particules par spectrométrie de plasma induit par laser, le dispositif (D) comportant :
• une chambre (CH),
• un moyen de pompage (MP) du gaz présent dans la chambre (CH) afin de faire régner le vide dans cette chambre,
• un système (SG) pour générer, à partir du gaz issu de l'échantillonneur (E), un jet desdites particules (JP) dans la chambre (CH),
• un laser (L) apte à émettre un faisceau laser (FL) sous la forme d'impulsions, auquel est associé un dispositif optique (DO) agencé pour focaliser ledit faisceau laser dans la chambre (CH), perpendiculairement à une direction de propagation du jet de particules (JP), pour créer, dans un volume focal (VF), un plasma par l'interaction entre le faisceau laser (FL) et les particules (N_{NP}) du jet, ledit plasma émettant d'autres particules, caractéristiques de l'interaction entre le faisceau laser et lesdites particules du jet,
• au moins un dispositif de détection (DD, DD') comportant un moyen (MC) pour collecter les particules émises par le plasma et un moyen (MAS, MAS') pour effectuer une analyse spectrométrique de ces particules ; **caractérisé en ce que** le système (S) comprend :
- au moins un moyen (MD, MD') dit de dilution pour diminuer la concentration des particules sous forme d'aérosol du gaz ambiant prélevé par l'échantillonneur, pour faire en sorte que le volume focal (VF) ne comprenne au plus qu'une particule individuelle.

2. Système (S) selon la revendication 1, **caractérisé en ce que** ledit moyen de dilution (MD) est situé entre une zone de prélèvement (ZP) du gaz ambiant susceptible de contenir des particules sous forme d'aérosol de l'échantillonneur (E) et le dispositif (D) de caractérisation desdites particules par spectrométrie de plasma induit par laser.

3. Système (S) selon la revendication précédente, **caractérisé en ce que** ledit moyen de dilution (MD) appartient à l'échantillonneur (E).

4. Système (S) selon la revendication précédente, **caractérisé en ce qu'**il comprend un moyen de dilution (MD') additionnel agencé entre l'échantillonneur (E) et le dispositif (D) de caractérisation desdites particules par spectrométrie de plasma induit par laser.

5. Système (S) selon l'une des revendications précédentes, **caractérisé en ce qu'**il comprend un processeur (P) configuré pour commander le moyen de dilution (MD), et éventuellement le moyen de dilution additionnel (MD'), en fonction des données fournies par le dispositif de détection (DD) du dispositif (D) de caractérisation des particules par spectrométrie de plasma induit par laser.

6. Système (S) selon l'une des revendications précédentes, **caractérisé en ce que** le dispositif de détection (DD, DD') comporte une pluralité de N fibres optiques (FO₁, FO₂, FO₃, ..., FO_{N-1}, FO_{N}), avec N un entier naturel strictement supérieur à l'unité, une extrémité (E1, E2, E3,..., EN) de chaque fibre optique (FO₁, FO₂, FOs, ..., FO_{N-1}, FO_{N}) étant agencée autour du volume focal (VF) et pointant vers ce volume focal (VF) pour assurer la collection des particules émises par le plasma.

7. Système (S) selon la revendication précédente, **caractérisé en ce que** lesdites fibres optiques (FO) sont montées sur une paroi externe (P_{EXT}), de forme sphérique, de la chambre (CH).

8. Système (S) selon l'une des revendications précédentes, **caractérisé en ce que** le moyen (MAS) pour effectuer une analyse spectrométrique des particules émises par le plasma comporte :
- au moins un filtre (FCB) de type coupe-bande, apte à assurer un filtrage dans une bandes de longueurs d'ondes données, et
- au moins un photodétecteur (PDT), par exemple de type photomultiplicateur d'électrons.

9. Système (S) selon la revendication précédente, **caractérisé en ce que** le moyen pour effectuer une analyse spectrométrique des particules émises par le plasma comporte :
- une pluralité de filtres (FCB) de type coupe-bande, apte à assurer un filtrage dans une bandes de longueurs d'ondes distinctes les unes des autres, et
- un photodétecteur (PDT), par exemple de type photomultiplicateur d'électrons, associé à chaque filtre coupe-bande.

10. Système (S) selon l'une des revendications 1 à 8, **caractérisé en ce que** le moyen (MAS') pour effectuer une analyse spectrométrique des particules émises par le plasma comporte :
- un spectrographe optique (SO), équipé :
- d'une caméra de type dispositif à transfert de charge intensifié (ICCD).

11. Système (S) selon l'une des revendications précédentes, **caractérisé en ce qu'**il comprend un autre dispositif de détection (ADD) comportant :
- une pluralité d'ensembles optiques (EO1 à EO8), montés sur la chambre (CH) et répartis angulairement autour de cette chambre (CH), pour collecter les particules émises par le plasma, et
- au moins un photodétecteur (PDT') relié à ladite pluralité d'ensembles optiques (EO1 à EO8) pour analyser la répartition angulaire desdites particules.

12. Système (S) selon l'une des revendications précédentes, **caractérisé en ce qu'**il comprend une caméra infrarouge (CIR) agencée pour mesurer une évolution de température des particules du jet de particules.

13. Procédé de mise en oeuvre d'un système selon l'une des revendications précédentes, ledit procédé comprenant les étapes suivantes :
a) prélever un gaz ambiant, lequel est susceptible de comporter des particules sous forme d'aérosol en une concentration en nombre à caractériser ;
b) détecter lesdites particules par spectrométrie de plasma induit par laser, chaque détection consistant en une détection d'au plus une particule individuelle dans ledit volume focal (VF) ;
c) compter, par unité de temps, le nombre de particules détectées à l'étape b); et
d) déterminer la concentration en nombre desdites particules dans le gaz ambiant prélevé, à partir d'une comparaison entre les données issues de l'étape c) et une base de données reliant ladite concentration en nombre audit comptage par unité de temps.

14. Procédé selon la revendication précédente, **caractérisé en ce qu'**il comporte, entre l'étape a) et l'étape b), une étape consistant à diminuer de manière contrôlée la concentration des particules présentes sous la forme d'un aérosol dans le gaz ambiant prélevé pour faire en sorte que le volume focal (VF) ne comprenne au plus qu'une particule individuelle.

## Patentansprüche

1. System (S) zur Charakterisierung von Partikeln, die in Form eines Aerosols in einem Umgebungsgas vorliegen, umfassend:
- einen Probennehmer (E), der fähig ist, das Umgebungsgas, das voraussichtlich Partikel in Form von Aerosol beinhaltet, zu entnehmen;
- eine Vorrichtung (D) zur Charakterisierung der Partikel durch laserinduzierte Plasmaspektrometrie, wobei die Vorrichtung (D) beinhaltet:
- eine Kammer (CH),
- ein Mittel zum Pumpen (MP) des in der Kammer (CH) vorhandenen Gases, um in dieser Kammer ein Vakuum zu schaffen,
- ein System (SG) zum Generieren eines Strahls der Partikel (JP) in der Kammer (CH), ausgehend von dem aus dem Probennehmer (E) stammenden Gas,
- einen Laser (L), der fähig ist, eine Laserstrahlung (FL) in Form von Impulsen senkrecht zu einer Ausbreitungsrichtung des Partikelstrahls (JP) zu emittieren, mit dem eine optische Vorrichtung (DO) assoziiert ist, die angeordnet ist, um die Laserstrahlung in der Kammer (CH) zu fokussieren, um in einem Fokalvolumen (VF) durch Wechselwirkung zwischen der Laserstrahlung (FL) und den Partikeln (N_{NP}) des Strahls ein Plasma zu erzeugen, wobei das Plasma andere Partikel emittiert, die für die Wechselwirkung zwischen der Laserstrahlung und den Partikeln des Strahls charakteristisch sind,
- mindestens eine Detektionsvorrichtung (DD, DD'), die ein Mittel (MC) zum Sammeln der durch das Plasma emittierten Partikel und ein Mittel (MAS, MAS') zum Ausführen einer spektrometrischen Analyse dieser Partikel beinhaltet; **dadurch gekennzeichnet, dass** das System (S) umfasst:
- mindestens ein Mittel (MD, MD') zur Verdünnung, um die Konzentration der Partikel in Form von Aerosol des durch den Probennehmer entnommenen Umgebungsgases zu verringern, um dafür zu sorgen, dass das Fokalvolumen (VF) höchstens ein individuelles Partikel umfasst.

2. System (S) nach Anspruch 1, **dadurch gekennzeichnet, dass** das Mittel zur Verdünnung (MD) zwischen einer Entnahmezone (ZP) des Umgebungsgases, das voraussichtlich Partikel in Form von Aerosol des Probennehmers (E) enthält, und der Vorrichtung (D) zur Charakterisierung der Partikel durch laserinduzierte Plasmaspektrometrie vorliegt.

3. System (S) nach dem vorstehenden Anspruch, **dadurch gekennzeichnet, dass** das Mittel zur Verdünnung (MD) zu dem Probennehmer (E) gehört.

4. System (S) nach dem vorstehenden Anspruch, **dadurch gekennzeichnet, dass** es ein zusätzliches Mittel zur Verdünnung (MD) umfasst, das zwischen dem Probennehmer (E) und der Vorrichtung (D) zur Charakterisierung der Partikel durch laserinduzierte Plasmaspektrometrie angeordnet ist.

5. System nach einem der vorstehenden Ansprüche, **dadurch gekennzeichnet, dass** es einen Prozessor (P) umfasst, der zum Steuern des Mittels zur Verdünnung (MD) und gegebenenfalls des zusätzlichen Mittels zur Verdünnung (MD') in Funktion der von der Detektionsvorrichtung (DD) und der Vorrichtung (D) zur Charakterisierung der Partikel durch laserinduzierte Plasmaspektrometrie bereitgestellten Daten konfiguriert ist.

6. System (S) nach einem der vorstehenden Ansprüche, **dadurch gekennzeichnet, dass** die Detektionsvorrichtung (DD, DD') eine Vielzahl von N Lichtwellenleitern (FO₁, FO₂, FO₃, ..., FO_{N-1}, FO_{N}) beinhaltet, wobei N eine natürliche ganze Zahl strikt größer als eins ist, wobei ein Ende (E1, E2, E3, ..., EN) von jedem Lichtwellenleiter (FO₁, FO₂, FO₃, ..., FO_{N-1}, FO_{N}) um das Fokalvolumen (VF) herum angeordnet ist und in Richtung dieses Fokalvolumens (VF) weist, um die Sammlung der durch das Plasma emittierten Partikel sicherzustellen.

7. System (S) nach dem vorstehenden Anspruch, **dadurch gekennzeichnet, dass** die Lichtwellenleiter (FO) auf einer externen Wand (P_{EXT}), in Kugelform, der Kammer (CH) montiert sind.

8. System (S) nach einem der vorstehenden Ansprüche, **dadurch gekennzeichnet, dass** das Mittel (MAS) zum Ausführen einer spektrometrischen Analyse von durch das Plasma emittierten Partikeln beinhaltet:
- mindestens einen Filter (FCB) des Bandsperrtyps, der fähig ist, eine Filterung in einer Bande der gegebenen Wellenlängen sicherzustellen, und
- mindestens einen Photodetektor (PDT), zum Beispiel vom Elektronenphotomultipliertyp.

9. System (S) nach dem vorstehenden Anspruch, **dadurch gekennzeichnet, dass** das Mittel zum Ausführen einer spektrometrischen Analyse von durch das Plasma emittierten Partikeln beinhaltet:
- eine Vielzahl von Filtern (FCB) des Bandsperrtyps, die fähig sind, eine Filterung in einer Bande der Wellenlängen sicherzustellen, die sich voneinander unterscheiden, und
- einen Photodetektor (PDT), zum Beispiel vom Elektronenphotomultipliertyp, der mit jedem Bandsperrfilter assoziiert ist.

10. System (S) nach einem der Ansprüche 1 bis 8, **dadurch gekennzeichnet, dass** das Mittel (MAS') zum Ausführen einer spektrometrischen Analyse von durch das Plasma emittierten Partikeln beinhaltet:
- einen optischen Spektrographen (SO), ausgestattet mit:
- einer Kamera vom Typ Vorrichtung zur intensivierten Übertragung von Ladung (ICCD).

11. System (S) nach einem der vorstehenden Ansprüche, **dadurch gekennzeichnet, dass** es eine andere Detektionsvorrichtung (ADD) umfasst, beinhaltend:
- eine Vielzahl von optischen Baugruppen (EO1 bis EO8), die an der Kammer (CH) montiert und winkelmäßig um diese Kammer (CH) herum verteilt sind, um die durch das Plasma emittierten Partikel zu sammeln, und
- mindestens einen Photodetektor (PDT'), der mit der Vielzahl von optischen Baugruppen (EO1 bis EO8) verbunden ist, um die Winkelverteilung der Partikel zu analysieren.

12. System (S) nach einem der vorstehenden Ansprüche, **dadurch gekennzeichnet, dass** es eine Infrarotkamera (CIR) umfasst, die zum Messen einer Temperaturentwicklung von Partikeln des Partikelstrahls angeordnet ist.

13. Verfahren zur Implementierung eines Systems nach einem der vorstehenden Ansprüche, wobei das Verfahren die folgenden Schritte umfasst:
a) Entnehmen eines Umgebungsgases, das voraussichtlich Partikel in Form von Aerosol in einer zu charakterisierenden Anzahlkonzentration beinhaltet;
b) Detektieren der Partikel durch laserinduzierte Plasmaspektrometrie, wobei jede Detektion aus einer Detektion von höchstens einem individuellen Partikel in dem Fokalvolumen (VF) besteht;
c) Zählen, pro Zeiteinheit, der Anzahl von in dem Schritt b) detektierten Partikeln; und
d) Bestimmen der Anzahlkonzentration der Partikel in dem entnommenen Umgebungsgas ausgehend von einem Vergleich zwischen den von dem Schritt c) ausgegebenen Daten und einer Datenbank, die die Anzahlkonzentration mit der Zählung pro Zeiteinheit verbindet.

14. Verfahren nach dem vorstehenden Anspruch, **dadurch gekennzeichnet, dass** es zwischen dem Schritt a) und dem Schritt b) einen Schritt beinhaltet, der aus dem Verringern der Konzentration von in Form eines Aerosols in dem entnommenen Umgebungsgas vorliegenden Partikeln auf kontrollierte Weise besteht, um dafür zu sorgen, dass das Fokalvolumen (VF) höchstens ein individuelles Partikel umfasst.

## Claims

1. A system (S) for characterising particles in the form of an aerosol in an ambient gas, comprising:
- a sampler (E) capable of sampling the ambient gas likely to contain particles in aerosol form;
- a device (D) for characterizing said particles by laser-induced plasma spectrometry, the device (D) comprising :
• one chamber (CH),
• means (MP) for pumping the gas present in the chamber (CH) in order to create a vacuum in this chamber,
• a system (SG) for generating, from the gas coming from the sampler (E), a jet of said particles (JP) in the chamber (CH),
• a laser (L) capable of emitting a laser beam (FL) in the form of pulses, with which is associated an optical device (DO) arranged to focus said laser beam in the chamber (CH), perpendicularly to a direction of propagation of the jet of particles (JP), in order to create, in a focal volume (VF), a plasma by the interaction between the laser beam (FL) and the particles (N_{NP}) of the jet, said plasma emitting other particles, characteristics of the interaction between the laser beam and said particles of the jet,
• at least one detection device (DD, DD') comprising a means (MC) for collecting the particles emitted by the plasma and a means (MAS, MAS') for carrying out a spectrometric analysis of these particles; **characterised in that** the system (S) comprises:
- at least one means (MD, MD') known as dilution to reduce the concentration of the particles in aerosol form in the ambient gas sampled by the sampler, so that the focal volume (VF) comprises at most only one individual particle.

2. The system (S) according to claim 1, **characterised in that** said dilution means (MD) is located between a sampling zone (ZP) for the ambient gas likely to contain particles in aerosol form from the sampler (E) and the device (D) for characterising said particles by laser-induced plasma spectrometry.

3. The system (S) according to the preceding claim, **characterised in that** said dilution means (MD) belong to the sampler (E).

4. The system (S) according to the preceding claim, **characterised in that** it comprises an additional dilution means (MD') arranged between the sampler (E) and the device (D) for characterising said particles by laser-induced plasma spectrometry.

5. The system (S) according to one of the preceding claims, **characterised in that** it comprises a processor (P) configured to control the dilution means (MD), and possibly the additional dilution means (MD'), as a function of the data supplied by the detection device (DD) of the device (D) for characterising the particles by laser-induced plasma spectrometry.

6. The system (S) according to one of the preceding claims, **characterized in that** the detection device (DD, DD') comprises a plurality of N optical fibres (FO₁, FO₂, FO₃, ..., FO_{N-1}, FO_{N}), with N a natural number strictly greater than unity, one end (E1, E2, E3, ..., EN) of each optical fibre (FO₁, FO₂, FO₃, ..., FO_{N-1}, FO_{N}) being arranged around the focal volume (VF) and pointing towards this focal volume (VF) to collect the particles emitted by the plasma.

7. The system (S) according to the preceding claim, **characterised in that** said optical fibres (FO) are mounted on a spherical outer wall (P_{EXT}) of the chamber (CH).

8. The system (S) according to one of the preceding claims, **characterised in that** the means (MAS) for carrying out a spectrometric analysis of the particles emitted by the plasma comprises:
- at least one band-stop filter (FCB), capable of filtering in a given wavelength band, and
- at least one photodetector (PDT), for example of the electron photomultiplier type.

9. The system (S) according to the preceding claim, **characterized in that** the means for carrying out a spectrometric analysis of the particles emitted by the plasma comprises:
- a plurality of band-stop filters (FCB), capable of filtering in a band of wavelengths distinct from one another, and
- a photodetector (PDT), for example of the electron photomultiplier type, associated with each band-stop filter.

10. The system (S) according to one of claims 1 to 8, **characterised in that** the means (MAS') for carrying out a spectrometric analysis of the particles emitted by the plasma comprises:
- an optical spectrograph (SO), equipped with :
- an Intensified Charge-Coupled Device (ICCD) camera.

11. The system (S) according to one of the preceding claims, **characterised in that** it comprises another detection device (ADD) comprising :
- a plurality of optical assemblies (EO1 to EO8), mounted on the chamber (CH) and angularly distributed around this chamber (CH), for collecting the particles emitted by the plasma, and
- at least one photodetector (PDT') connected to said plurality of optical assemblies (EO1 to EO8) for analysing the angular distribution of said particles.

12. The system (S) according to one of the preceding claims, **characterised in that** it comprises an infrared camera (CIR) arranged to measure a change in temperature of the particles in the particle jet.

13. A method of operating a system according to one of the preceding claims, said method comprising the following steps:
a) sampling an ambient gas, which is likely to contain particles in the form of an aerosol in a numerical concentration to be characterised;
b) detecting said particles by laser-induced plasma spectrometry, each detection consisting of the detection of at most one individual particle in said focal volume (VF);
c) counting, per unit of time, the number of particles detected in step b); and
d) determining the number concentration of said particles in the sampled ambient gas, from a comparison between the data from step c) and a database linking said number concentration to said count per unit time.

14. The method according to the preceding claim, **characterised in that** it comprises, between step a) and step b), a step consisting in reducing in a controlled manner the concentration of the particles present in the form of an aerosol in the ambient gas sampled in order to ensure that the focal volume (VF) comprises at most only one individual particle.
